# EUROPEAN PATENT APPLICATION

(11) **EP 3 178 678 A1**
(43) Date of publication of application: **14.06.2017**
(21) Application number: 16200662.1
(22) Date of filing: 25.11.2016
(51) Int. Cl.: B60C 25/132, B60P 3/14

(54) **VEHICLE-MOUNTED TIRE CHANGER WITH TIRE-EXPANDING MECHANISM**

(30) Priority: 27.11.2015 CN 201510840433
(71) Applicant: Bright Technology Co., Ltd., Yingkou City, Liaoning 115001 (CN)
(72) Inventor: WEI, Engui, Yingkou City, Liaoning 115001 (CN)
(74) Representative: Milli, Simone

(57) **Abstract**

The present disclosure provides a vehicle-mounted tire changer with a tire-expanding mechanism. A bottom plate is arranged on a frame of a pedestal, and a tubular guide rail is inserted into a hole in the frame and sleeved with a sliding bearing shell and a bearing box. A gear motor is fixed onto a left end of the pedestal, and the tire-expanding mechanism is inserted into the pedestal. A gearbox assembly extends across the bottom plate. A square vertical column assembly is fixed onto the pedestal through a bolt. A helper central sleeve of a power-driven tire-pressurizing helper assembly is inserted to a ferrule and tightly fastened to a tire-clamping column through a lower-arm collar. A polymer lithium-ion battery pack (48V> 20HV) is used as a direct-current power surface. An electrical element control box is provided with contactless relays for the motors, and a switch control box is provided with a contactless micro switch for controlling the relevant motors. A hydraulic mechanism may also be used, and the hydraulic mechanism and an electromagnetic clutch may be arranged at a position where an air conditioner for an engine of a vehicle is located. The tire changer is of a delicate structure, a small volume and a small weight. Further, the tire changer is of various functions due to the tire-expanding tire thereon. In addition, it is able to operate the tire changer conveniently, provide the tire changer with stable and reliable performance, and prolong its service life. (Figure 1)

## Description

### TECHNICAL FIELD

The present disclosure relates to the designing, manufacture and using of tire changer, in particular to the designing, manufacture and using of a vehicle-mounted tire changer with a tire-expanding mechanism.

### BACKGROUND

Currently, there are various tire changers having different structures in China and abroad. Most of them are used in garages, and some of them are mounted on vehicles, i.e., vehicle-mounted tire changers. Our company has presented a vehicle-mounted tire changer (ZL201520202776.1), which is small and light and can be operated and manufactured conveniently.

However, through experiments and practices, it is found that there are still the following defects. To be specific, a pedestal is provided with a flat, square slide rail, so the tire changer may vibrate to a great extent during the operation. Further, it is necessary for a sufficiently large force to cause a manually-operation helper to reach a pressurizing position. In addition, it is difficult to machine and operate a flat, square vertical column. Hence, there is an urgent need to change shapes and structures of the relevant components as well as the connection thereamong.

### SUMMARY

An object of the present disclosure is to provide a vehicle-mounted tire changer with a detachable tire-expanding mechanism, so as to improve the functions of the vehicle-mounted tire changer.

According to some embodiments of the present disclosure, some improvements have been made in relevant components of a vehicle-mounted tire changer, so as to overcome the existing defects.

An original flat, square slide rail of a pedestal assembly is changed into a tubular guide rail which is sleeved with a bearing box and a sliding bearing shell made of monomer cast nylon. To be specific, a bottom plate is arranged on a frame-like pedestal, and each of two tubular guide rails parallel to each other and installed in guide rail holes is sleeved with the bearing box and the sliding bearing shell made of monomer cast nylon. A gear motor is fixed to a left end portion of tubular guide rails through a curved plate and a bolt, an output shaft end of the gear motor is connected to a rear end of a screw rod, and a front end of the screw rod is in threaded connection with a nut at center of a lower surface of a gearbox body.

A gearbox assembly includes the gearbox body, and a gearbox consisting of an electric motor and the gearbox body connected to each other through a belt wheel and a triangular belt. A detachable tire-expanding mechanism is arranged on the frame-like pedestal, and includes a left transverse beam, a right transverse beam, an adjustable vertical shaft, a pin, a horizontal pin, a tire-expanding hook, a width adjustment seat, a tire seat, and an adjustment knob.

An original square vertical column of a square vertical column assembly is changed into a flat, square tube, and a ferrule is fixed onto the gearbox body through a bolt. A tire-clamping column is arranged on the ferrule, a tire-clamping disc is inserted into a hole in the tire-clamping column, and a double-thread screw is screwed into a central hole in the tire-clamping disc in a counterclockwise direction. A slit washer is inserted into a groove at a lowermost position of the double-thread screw, and the double-thread screw is locked tightly in the counterclockwise direction.

The square vertical column assembly is fixed onto the pedestal through a bolt, an output shaft end of a gear motor is connected to a lower end of a screw rod, and the screw rod is in threaded connection with a nut on a square sliding sleeve. The square sliding sleeve is sleeved onto a square sliding column, an upper end and a lower end of the square sliding sleeve are arranged on an upper rocker arm bracket and a lower rocker arm bracket respectively, and the upper and lower rocker arm brackets are positioned via positioning pins. A hexagonal shaft head within a central hole of an upper rocker arm is connected to a changing head. A multifunctional working-head fixation body is provided to fix a tire-pressurizing shovel or a tire-pressurizing wheel. The positioning pin is provided with a hexagonal shaft head which is provided with four positioning holes, and any of the positioning holes may be selected in accordance with the practical need. Structures of a lower rocker arm and relevant components are identical to the structures of the upper rocker arm and the relevant components. A hexagonal shaft head of the lower rocker arm is inserted into a tire-pressurizing disc, and fixed to the tire-pressurizing disc through a positioning pin. At this time, it is able for the vehicle-mounted tire changer to change a tire. In addition, the tire-pressurizing disc may be inserted at a reverse angle into an upper tire-dismounting hexagonal shaft head and fixed to the hexagonal shaft head through a positioning pin, so as to directly pressurize the tire.

A power-driven helper central sleeve of a power-driven tire-pressurizing helper assembly is inserted into the ferrule and tightly fastened onto the tire-clamping column through a lower-arm collar, and a screw rod is inserted into a central hole of a gear motor, and fixed to the gear motor through four bolts. A helper lower arm is arranged on the helper central sleeve through a column sleeve, and the screw rod is screwed into a nut. A horizontal sliding rail is arranged at an upper portion of the power-driven tire-pressurizing helper assembly, and a horizontal sliding rail nut slides along the horizontal sliding rail. A liftable screw rod is screwed into the horizontal sliding rail nut, a lifting knob is arranged at an upper end of the liftable screw rod, and a tire-pressurizing block is arranged at a lower end thereof. The helper central sleeve is fixed through a lower-arm collar, and the power-driven tire-pressurizing helper assembly is fixed onto the gearbox body through the bottom plate and a bolt.

In the embodiments of the present disclosure, a hydraulic mechanism is used as a power source, i.e., an electrical system which serves as the power source may be replaced with the hydraulic mechanism.

According to the embodiments of the present disclosure, the tire changer is of a delicate structure, and of various functions due to the tire-expanding mechanism thereon. Further, the tire changer is of a small volume, and it has a minimum size of 1.2m*1.2m (width*height). The tire changer is also of a small weight, because most of its components are made of an aluminium alloy. In addition, the tire changer may be operated conveniently and have stable and reliable performance, so it is able to improve the working efficiency thereof.

### BRIEF DESCRIPTION OF THE DRAWINGS

Fig.1 is a schematic view showing a tire changer according to one embodiment of the present disclosure;
Fig.2 is a schematic view showing a pedestal assembly according to one embodiment of the present disclosure;
Fig.3 is a schematic view showing a gearbox assembly according to one embodiment of the present disclosure;

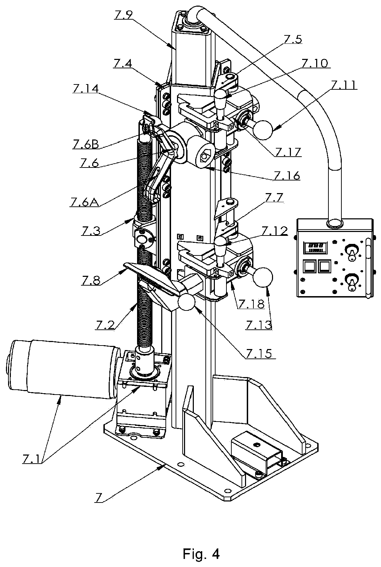

Fig.4 is a schematic view showing a square vertical column assembly according to one embodiment of the present disclosure;
Fig.5 is a schematic view showing a power-driven tire-pressurizing helper assembly according to one embodiment of the present disclosure;
Fig.6 is an exploded view of a tire-expanding mechanism; and

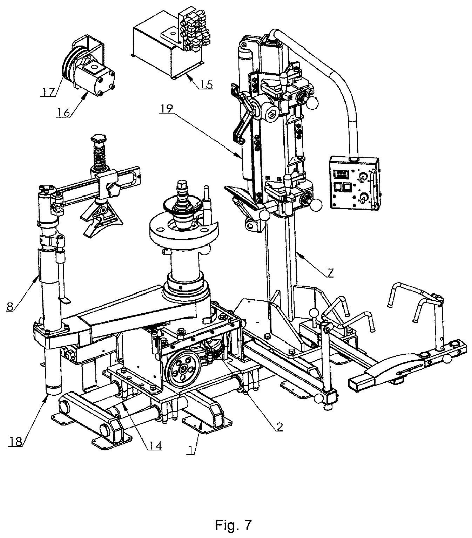

Fig.7 is a schematic view showing the installation of a hydraulic driving mechanism according to one embodiment of the present disclosure.

### Reference Sign List

- 1: pedestal assembly
- 2: gearbox assembly
- 3: gear motor
- 4: screw rod
- 5: pedestal nut
- 6: tubular guide rail
- 7: square vertical column assembly
- 8: power-driven tire-pressurizing helper assembly
- 9: tire-expanding mechanism
- 10: switch control box
- 11: electrical element control box
- 12: connection seat for tire-expanding mechanism
- 13: to-be-expanded tire
- 1.1: bottom plate
- 1.2: sliding bearing shell
- 1.3: bearing box
- 2.1: gearbox body
- 2.2: electric motor
- 2.3: belt wheel for electric motor
- 2.4: triangular belt
- 2.5: belt wheel for gearbox
- 2.6: gearbox
- 2.7: ferrule
- 2.8: tire-clamping column
- 2.9: tire-clamping disc
- 2.10: positioning pin for wheel
- 2.11: tire-clamping cone
- 2.12: slit washer
- 2.13: double-thread screw rod
- 2.14: connection pin
- 7.1: gear motor
- 7.2: screw rod
- 7.3: nut for square sliding sleeve
- 7.4: square sliding sleeve
- 7.5: upper rocker arm bracket
- 7.6: changing head
- 7.6A: tire-dismounting hook
- 7.6B: tire-mounting hook
- 7.7: lower rocker arm bracket
- 7.8: tire-pressurizing disc
- 7.9: square vertical column
- 7.10: upper handle for hook
- 7.11: upper positioning pin
- 7.12: lower handle for hook
- 7.13: lower positioning pin
- 7.14: upper positioning pin
- 7.15: lower positioning pin
- 7.16: working head fixation body
- 7.17: upper rocker arm
- 7.18: lower rocker arm
- 8.1: helper lower arm
- 8.2: gear motor
- 8.3: vertical column sleeve
- 8.4: screw rod
- 8.5: nut shaft sleeve
- 8.6: horizontal sliding rail
- 8.7: horizontal sliding rail nut
- 8.8: liftable screw rod
- 8.9: lifting knob
- 8.10: tire-pressurizing block
- 8.11: helper central sleeve
- 8.12: lower-arm collar
- 8.13: positioning button for nut of horizontal sliding rail
- 9.1: left transverse beam
- 9.2: pin
- 9.3: adjustable vertical shaft
- 9.4: horizontal pin
- 9.5: tire-expanding hook
- 9.6: right transverse beam
- 9.7: width adjustment seat
- 9.8: seat for tire
- 9.9: adjustment knob
- 14: hydraulic mechanism A
- 15: control valve set for hydraulic mechanisms
- 16: hydraulic mechanism
- 17: electromagnetic clutch
- 18: hydraulic mechanism B
- 19: hydraulic mechanism C

### DETAILED DESCRIPTION OF THE EMBODIMENTS

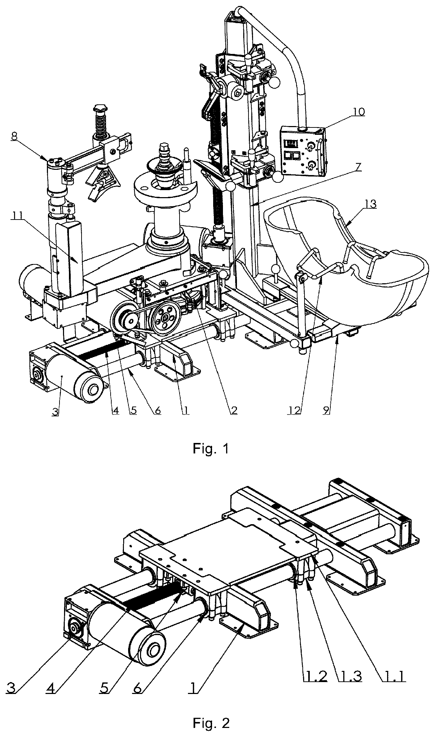

As shown in Figs.1 and 2, the present disclosure provides in some embodiments a vehicle-mounted tire changer, which includes a pedestal assembly 1, a gearbox assembly 2, a square vertical column assembly 7, a power-driven tire-pressurizing helper assembly 8, a tire-expanding mechanism 9, an electrical element control box 11 and a switch control box 10.

Fig.1 shows the pedestal assembly 1. A bottom plate 1.1 is arranged on a frame, and two parallel tubular guide rails 6 are arranged in guide rail holes of the frame respectively. Each tubular guide rail 6 is sleeved with a sliding bearing shell 1.2 made of monomer cast nylon and a bearing box (1.3) of the sliding bearing shell (1.2). An upper portion of the bearing box 1.3 is connected to a lower surface of the bottom plate 1.1. A gear motor 3 is fixed to a left end of the tubular guide rail 6 through a curved plate and a bolt, an output shaft end of the gear motor 3 is connected to a screw rod 4 on the frame, and a front end of the screw rod 4 is in threaded connection with a pedestal nut 5 at a center of a lower portion of the bottom plate 1.1.

The gearbox assembly 2 extends across the bottom plate 1.1 of the pedestal 1, and includes a gearbox body 2.1 and an electric motor 2.2. An electric-motor belt wheel 2.3 is connected to a gearbox belt wheel 2.5 via a triangular belt 2.4, so as to form a gearbox 2.6.

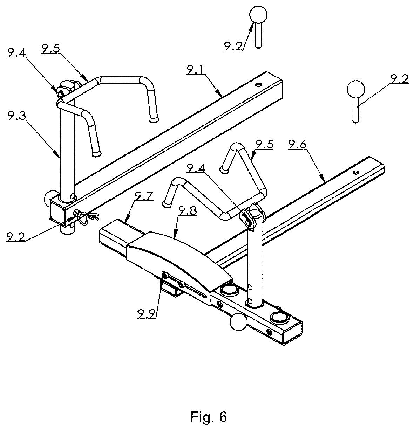

Figs.1 and 6 show the tire-expanding mechanism assembly 9 which is connected to the pedestal 1. Fig.6 shows an exploded state of the tire-expanding mechanism assembly 9, and the structure as well as the connection among the components thereof will be described hereinafter.

An adjustable vertical shaft 9.3 is inserted into, and fixed by a pin 9.2 to, a front portion of a left transverse beam 9.1. The adjustable vertical shaft 9.3 is provided at its lower portion with transverse circular holes, and in the case that the adjustable vertical shaft 9.3 is inserted into a hole in a front portion of the left transverse beam 9.1 and a hole at the right side of a width adjustment seat 9.7 on a right transverse beam 9.6, it is able to adjust a position of the adjustable vertical shaft 9.3 in accordance with the practical need.

A tire-expanding hook 9.5 is arranged at an upper portion of the adjustable vertical shaft 9.3, and fixed to the adjustable vertical shaft 9.3 through a horizontal pin 9.4. The width adjustment seat 9.7 is arranged at a front portion of the right transverse beam 9.6, a tire seat 9.8 is arranged on the width adjustment seat 9.7, and an adjustment knob 9.9 is provided on the tire seat 9.8. The adjustable vertical shaft 9.3 is inserted into the hole at the right side of the width adjustment seat 9.7, and fixed to the width adjustment seat 9.7 through the pin 9.2. The tire-expanding hook 9.5 is arranged on the adjustable vertical shaft 9.3, and fixed to the adjustable vertical shaft 9.3 through the horizontal pin 9.4.

There are three holes for the adjustable vertical shaft at the right side of the width adjustment seat 9.7, and any of them may be selected in accordance with the practical need.

During the assembling, the left transverse beam 9.1 and the right transverse beam 9.6 are inserted through the holes in the rear portions of the left transverse beam 9.1 and the right transverse beam 9.6, and fixed by pins 9.2 to left and right connection seats 12 for the tire-expanding mechanism on the pedestal 1, respectively. In this way, it is able to install the tire-expanding mechanism on the tire changer and enable the tire-expanding mechanism to use an identical power source to the tire changer. The tire-expanding mechanism may be installed on the tire changer in use, and detached therefrom if unnecessary.

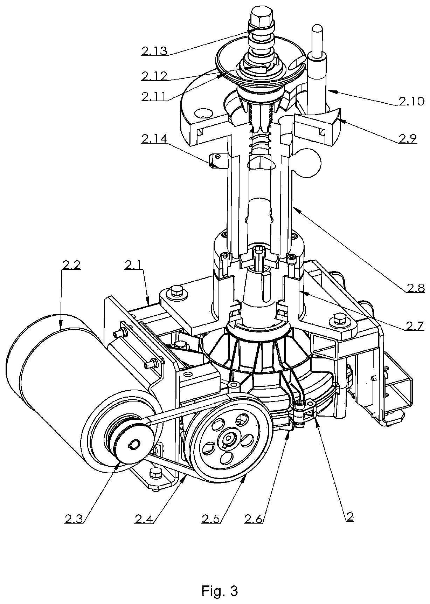

As shown in Figs.1 and 3, the gearbox assembly extends across the bottom plate 1.1 of the pedestal 1, and fixed onto the bottom plate 1.1 through the bolt. The gearbox 2.6 is received in the gearbox body 2.1. The electric motor 2.2 is fixed at the right side of the gearbox body 2.1 through the curved plate and the bolt, and the electric-motor belt wheel 2.3 is connected to the gearbox belt wheel 2.5 through the triangular belt 2.4. A ferrule 2.7 is fixed to top surface of the gearbox body 2.1 through a bolt, a tire-clamping column 2.8 is arranged on the ferrule 2.7, and a tire-clamping disc 2.9 is inserted into a hole in the tire-clamping column 2.8. A double-thread screw rod 2.13 is screwed into a central hole in the tire-clamping disc 2.9 in a counterclockwise direction. A slit washer 2.12 is inserted into a groove at a lowermost position of an upper portion of the double-thread screw rod 2.13, and the double-thread screw rod 2.13 is locked tightly in the counterclockwise direction.

As shown in Fig.1, the square vertical column assembly 7 is fixed onto the pedestal 1 through a bolt. An output shaft end of a gear motor 7.1 is connected to a lower end of a screw rod 7.2, which is in threaded connection with a nut 7.3 on a square sliding sleeve 7.4. The square sliding sleeve 7.4 is sleeved onto a square vertical column 7.9, and an upper end and a lower end of the square sliding sleeve 7.4 are arranged on an upper rocker arm bracket 7.5 and a lower rocker arm bracket 7.7 respectively. The upper rocker arm bracket 7.5 and an upper rocker arm 7.17 are position by an upper position pin 7.11, and a hexagonal shaft head in a central hole of the upper rocker arm 7.17 is connected to a changing head 7.6. The changing head 7.6 has a tire-dismounting hook 7.6A and a tire-mounting hook 7.6B. A multifunctional working head fixation body 7.16 is provided to fix a tire-pressurizing shovel or a tire-pressurizing wheel. The upper positioning pin 7.11 is provided with a hexagonal shaft head, which is provided with four positioning holes, and any of the positioning holes may be selected in accordance with the practical need. Structures of a lower rocker arm 7.18 and relevant components are identical to the structures of the upper rocker arm 7.17 and the relevant components. A hexagonal shaft head of the lower rocker arm 7.18 is inserted into a tire-pressurizing disc 7.8, and fixed to the tire-pressurizing disc 7.8 through a positioning pin 7.15. At this time, it is able for the vehicle-mounted tire changer to change a tire. In addition, the tire-pressurizing disc 7.8 may be inserted at a reverse angle into an upper tire-dismounting hexagonal shaft head and fixed to the hexagonal shaft head through a positioning pin 7.13, so as to directly pressurize the tire.

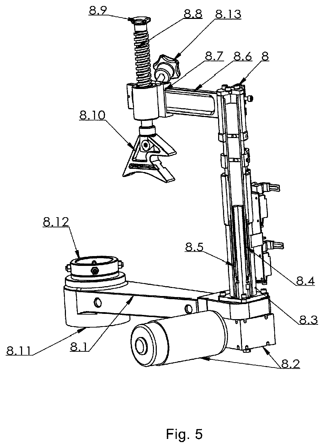

As shown in Figs.1 and 5, a helper central sleeve 8.11 is inserted into the ferrule 2.7 and tightly fastened onto the tire-clamping column 2.8 through a lower-arm collar 8.12. A screw rod 8.4 is inserted into a central hole of a gear motor 8.2, and fixed to the gear motor through four bolts. A helper lower arm 8.1 is arranged on the helper central sleeve 8.11 through a column sleeve 8.3, and the screw rod 8.4 is screwed into a nut shaft sleeve 8.5.

A horizontal sliding rail 8.6 is arranged at an upper portion of the power-driven tire-pressurizing helper assembly 8, and a horizontal sliding rail nut 8.7 is slidable along the horizontal sliding rail. A liftable screw rod 8.8 is screwed into the horizontal sliding rail nut 8.7, a lifting knob 8.9 is arranged at an upper end of the liftable screw rod 8.8, and a tire-pressurizing block 8.10 is arranged at a lower end thereof. The helper central sleeve 8.11 at a front end of the helper lower arm 8.1 is fixed by the lower-arm collar 2.12. The power-driver tire-pressurizing helper assembly 8 is fixed onto the gearbox body 2.1 through the bottom plate and the bolt.

In Fig.1, contactless relays for all the motors of the tire changer are provided in the electrical element control box 11. A rear end of the switch control box 10 is connected to an upper portion of the square vertical column assembly 7 and provided with a contactless micro switch for controlling the rotation of the motors.

A power source adopted in the embodiments of the present disclosure is a polymer lithium-ion battery pack (48V>20Hv)for an electrically-operation vehicle, and it is connected to the electrical elements via wires. Optionally, a lead battery pack with an identical specification may also be adopted.

The gear motor consists of an electric motor and a gear reducer connected to the electric motor, and any market-available gear motor may be adopted.

In the embodiments of the present disclosure, the tubular guiding rails, the helper connection arms, the square vertical column, the square sliding sleeve, a column seat, the upper and lower rocker arms, and the bearing box may be made of an aluminium alloy, so as to reduce the weight of the entire tire changer.

In the embodiments of the present disclosure, the power driving mechanism may be replaced with a hydraulic driving mechanism.

The hydraulic driving mechanism includes a control valve set 15, a hydraulic mechanism A14 arranged at a lower portion of the bottom plate 1.1, a hydraulic mechanism B18 arranged on the power-driven tire-pressurizing helper 8, and a hydraulic mechanism C19 arranged on the square vertical column assembly 7. A tire-pressurizing mechanism 16 and an electromagnetic clutch 17 form a coaxial assembly which is arranged at a position where an air-conditioning pump for an engine of a vehicle is located. In the case that the vehicle is started, it may be switched to a neutral position and then braked, and at this time, the supply of a hydraulic source may be controlled through the electromagnetic clutch 17.

The operation procedure of the tire changer in the embodiments of the present disclosure will be described hereinafter. At first, the contactless micro switch on the switch control box 10 may be pressed, and at this time a battery indicator emits light. Next, the nut under the top of the double-thread screw rod 2.13 on the square vertical column assembly 7 may be released, so as to remove the slit washer 2.12 and a tire-clamping cone 2.11. A to-be-changed wheel may be placed on the tire-clamping disc 2.9 in such a manner that a unique threaded hole in the wheel is aligned with a wheel positioning pin 2.10. Then, the tire-clamping cone 2.11 may be inserted into the double-thread screw rod 2.13, and the slit washer 2.12 may be inserted into the groove of the double-thread screw rod 2.13. The double-thread screw rod 2.13 may be screwed into the unique threaded hole in the wheel with a wrench in the counterclockwise direction, so as to fasten the wheel. Next, the handle 7.11 on the square vertical column assembly may be moved, so as to move the changing head 7.6 to the right and away from the tire. A leading edge of the tire-pressurizing disc 7.8 may be aligned with a lower edge of a hub. A button for controlling the gear motor on the switch control box 10 may be pressed, so as to enable the tire-clamping disc 2.9 to rotate intermittently. Another switch may be turned on, so as to enable the tire-pressurizing wheel to rotate and meanwhile move downward, until the hub is separated from the tire. Next, the tire-pressuring wheel may be moved upward, the pin 7.14 may be moved away, and the tire-mounting hook 7.6B may be turned downward to tightly lock the pin. Next, the tire may be rotated, the changing head 7.6 may be moved downward, and the gearbox assembly may be moved forward (to the right) slightly so as not to be in contact with the hub. After an edge of the hub has been hooked by the tire-dismounting hook of the changing head 7.6, the changing head 7.6 may be lifted, the gearbox assembly may be moved backward (to the left), and the tire may be rotated so as to be removed from the hub.

After the tire has been repaired or changed, the pin 7.14 may be moved away, and the tire-mounting hook 7.6B may be turned downward so as to tightly lock the pin 7.14. Through the above-mentioned operations, it is able to put the tire onto the hub.

The tire-expanding mechanism installed on the tire changer is equivalent to a tire expander. The operation procedure of the tire-expanding mechanism will be described hereinafter. The exploded components of the tire-expanding mechanism in Fig.6 may be assembled together, and the left transverse beam 9.1 and the right transverse beam 9.6 may be inserted into, and fixed by the pin 9.2 to, the connection seat 1.2 of the tire-expanding mechanism installed on the tire changer. A switch on the switch control box 10 may be pressed, so as to move the gearbox assembly to be at the front end (the rightmost end) for standby. Next, the width adjustment seat 9.7 may be moved to a position corresponding to the to-be-expanded tire, and so does the adjustable vertical shaft 9.3. An inner edge of the to-be-expanded tire may then be hooked by the two tire-expanding hooks 9.5, and the adjustment knob 9.9 may be moved to a central position and then fastened. Next, a corresponding button on the switch control box 10 may be pressed, so as to move the gearbox assembly 2 backward (to the left) to a position suitable for the expansion of the tire. At this time, the tire may be expanded.

## Claims

1. A vehicle-mounted tire changer with a tire-expanding mechanism, comprising a pedestal assembly (1), a gearbox assembly (2), a square vertical column assembly (7), a power-driven tire-pressurizing helper assembly (8), a tire-expanding mechanism (9), a electrical element control box (11) and a switch control box (10), wherein
a bottom plate (1.1) is arranged on a frame of the pedestal assembly (1), two parallel tubular guiding rails (6) are arranged in guiding rail holes in the frame, each of the two parallel tubular guiding rails (6) is sleeved with a sliding bearing shell (1.2) made of monomer cast nylon and a bearing box (1.3) of the sliding bearing shell (1.2), an upper portion of the bearing box (1.3) is connected to a lower surface of the bottom plate (1.1), a gear motor (3) is fixed to a left end of the tubular guiding rails (6) through a curved plate and a bolt, an output shaft end of the gear motor (3) is connected to a screw rod (4), and the screw rod (4) is in threaded connection with a pedestal nut (5) at a central position of the lower surface of the bottom plate (1.1);
the gearbox assembly (2) extends across the bottom plate (1.1) of a pedestal (1) and comprises a gearbox body (2.1) and an electric motor (2.2), a belt wheel (2.3) for the electric motor is connected to a belt wheel (2.5) for a gearbox through a triangular belt (2.4) to form the gearbox (2.6), a ferrule (2.7) is fixed onto the gearbox body (2.1) through a bolt, a tire-clamping column (2.8) is arranged on the ferrule (2.7), a tire-clamping disc (2.9) is inserted into a hole in the tire-clamping column (2.8), a double-thread screw rod (2.13) is screwed into a central hole of the tire-clamping disc (2.9) in a counterclockwise direction, a slit washer (2.12) is inserted into a groove at a lowermost position of an upper portion of the double-thread screw rod (2.13), and the double-thread screw rod (2.13) is tightly locked in the counterclockwise direction;
the square vertical column assembly (7) is fixed onto the pedestal assembly (1) through a bolt, an output shaft end of a gear motor (7.1) is connected to a lower end of a screw rod (7.2), the screw rod (7.2) is in threaded connection with a sliding sleeve nut (7.3) on a square sliding sleeve (7.4), the square sliding sleeve (7.4) is sleeved onto a square vertical column (7.9), an upper end and a lower end of the square sliding sleeve (7.4) are arranged on an upper rocker arm bracket (7.5) and a lower rocker arm bracket (7.7) respectively, the upper rocker arm bracket (7.5) and an upper rocker arm (7.17) are positioned through an upper positioning pin (7.11), a hexagonal shaft head within a central hole of the upper rocker arm (7.17) is connected to a changing head (7.6) which comprises a tire-dismounting hook (7.6A) and a tire-mounting hook (7.6B), a multifunctional working head fixation body (7.16) is provided, a hexagonal shaft head of an upper positioning pin (7.14) is provided with four positioning holes, structures of a lower rocker arm (7.18) and relevant components are identical to the structures of the upper rocker arm (7.17) and the relevant components, and a hexagonal shaft head of the lower rocker arm (7.18) is inserted into the tire-pressurizing disc (7.8) and fixed to the tire-pressurizing disc (7.8) through a lower positioning pin (7.15);
a helper central sleeve (8.11) of the power-driven tire-pressurizing helper assembly (8) is inserted into the ferrule (2.7) and tightly fastened to the tire-clamping column (2.8) through a lower-arm collar (8.12), a screw rod (8.4) is inserted into a central hole of a gear motor (8.2) and fixed to the gear motor (8.2) through four bolts, a helper lower arm (8.1) is arranged on the helper central sleeve (8.11) through a vertical square sleeve (8.3), the screw rod (8.4) is screwed into a nut shaft sleeve (8.5), a horizontal sliding rail (8.6) is arranged at an upper portion of the power-driven tire-pressurizing helper assembly (8), a horizontal sliding rail nut (8.7)is slidable along the horizontal sliding rail (8.6), a liftable screw rod (8.8) is screwed into the nut, a lifting knob (8.9) is arranged at an upper end of the liftable screw rod (8.7), a tire-pressurizing block (8.10) is arranged at a lower end of the liftable screw rod (8.7), the helper central sleeve at a leading end of the helper lower arm (8.1) is fixed through the lower-arm collar (8.12), and the power-driven tire-pressurizing helper assembly (8) is fixed onto the gearbox body (2.1) through a bolt;
the tire-expanding mechanism assembly (9) is provided if necessary, wherein an adjustable vertical shaft (9.3) is inserted into and fixed by a pin (9.2) to a front portion of a left transverse beam (9.1), a tire-expanding hook (9.5) is arranged on and fixed by a horizontal pin (9.4) to the adjustable vertical shaft (9.3), a width adjustment seat (9.7) is arranged at a front portion of a right transverse beam (9.6), a tire seat (9.8) is arranged on the width adjustment seat (9.7) and provided with an adjustment knob (9.9), another adjustable vertical shaft (9.3) is inserted into a hole at a right side of the width adjustment seat (9.7) and fixed to the width adjustment seat (9.7) through another pin (9.2), another tire-expanding hook (9.5) is arranged on and fixed by another horizontal pin (9.4) to the another adjustable vertical shaft (9.3),
the left transverse beam (9.1) and the right transverse beam (9.6) are provided at their rear portions with holes and inserted into connection seats (12) of the left and right tire-expanding mechanism on the pedestal (1) respectively, and the tire-expanding mechanism assembly (9) is driven by a power source identical to the tire changer;
the electrical element control box (11) is provided with contactless relays for the respective motors in the tire changer, and the switch control box (1) is provided with a contactless micro switch for controlling the clockwise and counterclockwise rotation of the motors; and
a polymer lithium-ion battery pack is used as a direct-current power source of the tire changer, the polymer lithium-ion battery pack is 48V > 20HV, and is connected to the electrical elements through wires.

2. The vehicle-mounted tire changer according to claim 1, wherein a lead battery pack is used as a direct-current power source of the tire changer , the lead battery pace is 48V > 20HV.

3. The vehicle-mounted tire changer according to claim 1, wherein a hydraulic driving system is used as a power source and comprises a control value set (15), a hydraulic mechanism A (14) is arranged at a lower surface of the bottom plate (1.1), a hydraulic mechanism B (18) is arranged on the power-driven tire-pressurizing helper assembly (8), a hydraulic mechanism C (19) is arranged on the square vertical column assembly (7), a hydraulic mechanism (16) and an electromagnetic clutch (17) form a coaxial assembly which is arranged at a position where an air-conditioning pump for an engine of a vehicle is located, the vehicle is set to a neutral position in the case that it is started, and the supply of a hydraulic source is controlled through the electromagnetic clutch (17).
